# EUROPEAN PATENT APPLICATION

(11) **EP 4 596 236 A1**
(43) Date of publication of application: **06.08.2025**
(21) Application number: 23872323.3
(22) Date of filing: 26.09.2023
(51) Int. Cl.: B32B 27/00, B32B 5/24, B32B 29/00, E04F 13/07, E04F 13/08

(54) **DECORATIVE SHEET, RESIN-IMPREGNATED DECORATIVE PANEL, AND METHOD FOR PRODUCING RESIN-IMPREGNATED DECORATIVE PANEL**

(30) Priority: 28.09.2022 JP 2022154622; 20.03.2023 JP 2023044164
(71) Applicant: Dai Nippon Printing Co., Ltd., Tokyo 162-8001 (JP)
(72) Inventor: TSURUTA, Keisuke, Tokyo 162-8001 (JP); NISHINE, Miyuki, Tokyo 162-8001 (JP)
(74) Representative: Müller-Boré & Partner Patentanwälte PartG mbB
(86) International application number: PCT/JP2023/034893
(87) International publication number: WO 2024/071100

(57) **Abstract**

The present disclosure provides a decorative sheet used for a production of a resin-impregnated decorative plate, the decorative sheet comprising: a porous substrate; a design layer; and a releasing layer formed in a pattern, in this order in a thickness direction, the design layer is disposed so as to cover an entire surface of the porous substrate, viewed from the thickness direction, and includes a polar group containing resin layer including a resin including any one or more polar groups of a hydroxy group, an amino group and a carboxy group, and an ash content included in the decorative sheet is 15% by mass or more and 40% by mass or less.

## Description

### Technical Field

The present disclosure relates to a decorative sheet, a resin-impregnated decorative plate and a method for producing a resin-impregnated decorative plate.

### Background Art

Resin-impregnated decorative plates obtained by impregnating precursor (uncured resin) such as melamine resin into porous substrates, and then, curing the resin precursor, are conventionally known. The resin-impregnated decorative plates are used for walls, furniture, and floors of houses, shops, and public facilities.

Melamine decorative plates expressing gloss matte tone designs are known. For example, Patent Document 1 discloses a decorative plate comprising a releasing layer in a part of the region of the surface of a porous substrate; in a remaining region of the surface of the porous substrate where no releasing layer is disposed, a thermosetting resin layer is included, and the thermosetting resin impregnated into the porous substrate is cured; the porous substrate is a fibrous substrate; and a height difference between the thermosetting resin layer and the releasing layer is 5µm or more.

Patent Document 1 discloses that, according to the method described therein, the surface of the decorative plate can express a clear gloss matte tone design since the thermosetting resin layer expresses a gloss tone design and the releasing layer expresses a matte tone design; or the thermosetting resin layer expressed a matte tone design and the releasing layer expressed a gloss tone design.

### Citation List

### Patent Documents

Patent Document 1: Japanese Patent No. 6716877
Patent Document 2: Japanese Patent No. 6915489

### Summary of Disclosure

### Technical Problem

However, since the ink is easily permeated into porous substrates, the releasing layer tends to be thin. When the releasing layer becomes thinner, when the cured resin on the releasing layer is peeled off in post-processing, the cured resin cannot be peeled off sufficiently and remains, making it difficult to exhibit a gloss matte design. Meanwhile, when the impregnation property into the porous substrate is too low, the releasing layer is thick and tends to remain, while it is difficult to impregnate the uncured resin, which prevents it from being processed as a decorative plate.

In response to the above problem, Patent Document 2 describes that, by disposing a coating layer including a predetermined amount of casein on a paper substrate, a decorative sheet that can suppress the permeation of ionizing radiation curable resin into the paper substrate, without inhibiting the permeation of the uncured material of melamine resin into the paper substrate, is obtained.

However, for the decorative sheets used for a production of a resin-impregnated decorative plate, further improvements in the impregnation property of uncured resins and improvement in the gloss matte designability are required. The present disclosure has been made in view of the above circumstances, and an object of the present disclosure is to provide a decorative sheet capable of obtaining a resin-impregnated decorative plate into which an uncured resin is well impregnated, and that can stably exhibit a gloss matte design.

### Solution to Problem

The present disclosure provides a decorative sheet used for a production of a resin-impregnated decorative plate, the decorative sheet comprising: a porous substrate; a design layer; and a releasing layer formed in a pattern, in this order in a thickness direction, the design layer is disposed so as to cover an entire surface of the porous substrate, viewed from the thickness direction, and includes a polar group containing resin layer including a resin including any one or more polar groups of a hydroxy group, an amino group and a carboxy group, and an ash content included in the decorative sheet is 15% by mass or more and 40% by mass or less.

Also, the present disclosure provides a resin-impregnated decorative plate comprising: the decorative sheet described above; a core substrate disposed so as to face the porous substrate of the decorative sheet; and a cured resin layer disposed between patterns of the releasing layer, and includes a cured product of a curable resin; the core substrate and the porous substrate include the cured product of the curable resin.

Also, the present disclosure provides a method for producing a resin-impregnated decorative plate, the method comprising: a preparing step of preparing the decorative sheet described above; a stacked body forming step of forming a stacked body (i) including a core substrate, the decorative sheet, a curable resin layer including a curable resin Y, and a release film, in this order in a thickness direction, (ii) a porous substrate side surface of the decorative sheet is disposed so as to face the core substrate, and (iii) the decorative sheet is impregnated with the curable resin Y; a heating and pressurizing step of obtaining a cured stacked body by curing the curable resin Y, and forming a cured resin layer from the curable resin layer by heating and pressurizing the stacked body; and a peeling step of removing the cured resin layer disposed at a position overlapping with the releasing layer in the thickness direction, and remaining the cured resin layer disposed between patterns of the releasing layer by peeling the release film from the cured stacked body.

### Advantageous Effects of Disclosure

The present disclosure exhibits an effect that it is possible to provide a decorative sheet capable of obtaining a resin-impregnated decorative plate into which an uncured resin that is a precursor of, for example, melamine resin is well impregnated, and that can stably exhibit a gloss matte design.

### Brief Description of Drawings

[FIGS. 1] are schematic cross-sectional views exemplifying a decorative sheet in the present disclosure.
[FIGS. 2] are schematic planar views exemplifying a polar group containing resin layer in the present disclosure.
[FIG. 3] is a schematic cross-sectional view exemplifying a resin-impregnated decorative plate in the present disclosure.
[FIGS. 4] are schematic cross-sectional views exemplifying a method for producing a resin-impregnated decorative plate in the present disclosure.
[FIGS. 5] are schematic views of a container and a lid used in the impregnation property evaluation in Examples.
[FIGS. 6] are views explaining a method for evaluating an impregnation property in Examples.

### Description of Embodiments

Embodiments are hereinafter explained with reference to, for example, drawings. However, the present disclosure is implemented in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is placed on the other member, when described as merely "above" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

### A. Decorative sheet

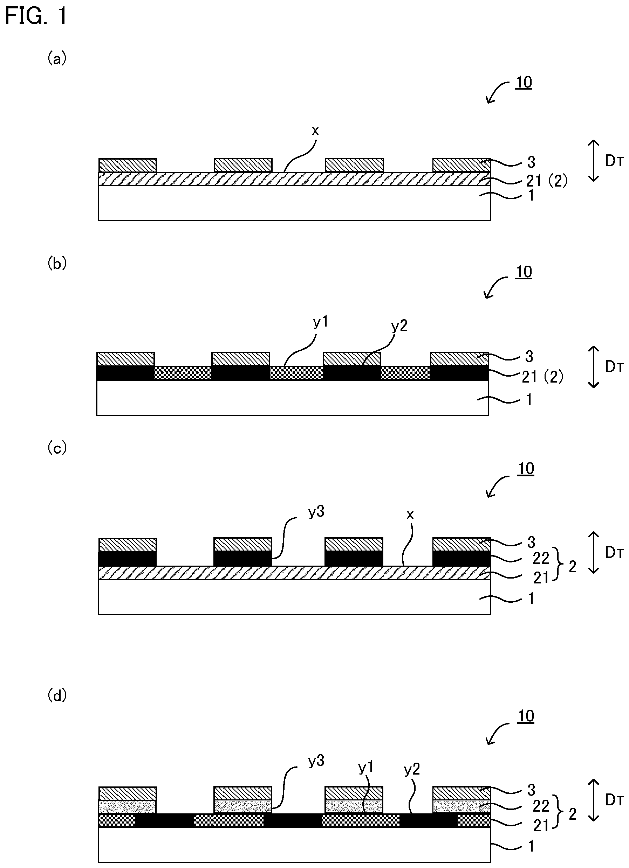

The decorative sheet in the present disclosure will be hereinafter described in detail. FIGS. 1(a) to (d) are schematic cross-sectional views exemplifying the decorative sheet in the present disclosure. The decorative sheet 10 shown in FIGS. 1 comprises: a porous substrate 1; a design layer 2; and a releasing layer 3 formed in a pattern, in this order, in a thickness direction D_{T}. In the present disclosure, the design layer 2 includes a polar group containing resin layer 21 including a resin including any one or more polar groups of hydroxyl group, amino group, and carboxyl group. The polar group containing resin layer 21 is disposed so as to cover an entire surface of the porous substrate 1, as viewed from the thickness direction D_{T}. Also, in the decorative sheet 10 in the present disclosure, an ash content included in the decorative sheet 10 is 15% by mass or more and 40% by mass or less.

In FIG. 1(a), the polar group containing resin layer 21 is a solid layer x including the resin including a specific polar group. In FIG. 1(b), the polar group containing resin layer 21 is a layer wherein a plurality of pattern layers y1 and y2, including the resin including a specific polar group, are disposed next to each other so as to cover the entire surface of the porous substrate.

Also, in the decorative sheet 10 in FIG. 1(b), the releasing layer 3 is disposed so that it is aligned with the pattern of the pattern layer y2.

Also, in the decorative sheet 10 shown in FIG. 1(c), the design layer 2 includes a polar group containing resin layer 21, and another layer 22 not corresponding to the polar group containing resin layer. The polar group containing resin layer 21 is disposed between the other layer 22 and the porous substrate 1. In FIG. 1(c), the polar group containing resin layer 21 is a solid layer **x,** and the other layer 22 is the pattern layer y3.

Also, in the decorative sheet 10 shown in FIG. 1(d), the design layer 2 includes a polar group containing resin layer 21, and another layer 22 not corresponding to the polar group containing resin layer. The polar group containing resin layer 21 is disposed between the other layer 22 and the porous substrate 1. In FIG. 1(d), the polar group containing resin layer 21 is constituted from pattern layers y1, y1, and the other layer 22 is the pattern layer y3.

The coating layer described in Patent Document 2 is provided on the decorative layer. In this case, the color and luster of the coating layer greatly affect the design. Further, since the coating layer itself is also formed using ink, depending on the type of porous substrate, the coating layer may permeate into the porous substrate and cannot maintain a sufficient thickness of the releasing layer in some cases. Meanwhile, when the coating layer is provided on the decorative layer, the impregnation of the curable resin into the porous substrate may be insufficient so that the processing ability of the decorative plate may be deteriorated. Therefore, it has been difficult to obtain a resin-impregnated decorative plate that can exhibit a gloss matte design stably.

A decorative sheet capable of obtaining a resin-impregnated decorative plate into which an uncured resin is well impregnated, and that can stably exhibit a gloss matte design can be obtained by setting the ash content of the decorative sheet in the present disclosure in a predetermined range; disposing the design layer, disposed between the releasing layer and porous substrate, so as to cover the entire surface of the porous substrate, as viewed from the thickness direction; and including a polar group containing resin layer including a resin including a specific polar group. In other words, in the present disclosure, the tradeoff between maintaining the impregnation property of uncured resins related to processability; and inhibition of the permeability of inks forming the releasing layer related to the development of gloss matte designs, is controlled by the ash content of the decorative sheet (mainly porous substrate) and the design layer including a polar group containing resin layer.

In the decorative sheet in the present disclosure, the ash content being the predetermined value or more means that the gap within the porous substrate is moderately large. Further, although the impregnation property of uncured resins tends to deteriorate, when the design layer includes, for example, a solid layer, in the present disclosure, the impregnation property of uncured resins such as melamine resin, having hydrophilicity, is improved, since the polar group containing resin layer includes the resin including a specific polar group. Thereby, the impregnation property of the uncured resin with respect to the porous substrate is improved.

Also, the ash content being the predetermined value or less means that the gap within the porous substrate is moderately small, so that the permeation of inks forming the releasing layer, taking a role in the development of gloss matte designs, into the porous substrate can be suppressed. Further, the design layer including the polar group containing resin layer moderately inhibits the permeation of the ink that forms the releasing layer. Therefore, it is possible to obtain a decorative sheet capable of obtaining a resin-impregnated decorative plate that can stably exhibit a gloss matte design.

Also, in the decorative sheet in the present disclosure, since a coating layer, such as one described in Patent Document 2, is not needed to be provided on the design layer, the deterioration of the design can be suppressed.

### 1. Members of decorative sheet

The decorative sheet in the present disclosure includes at least a porous substrate, a design layer, and a releasing layer.

### (1) Design layer

The design layer in the present disclosure is disposed between the porous substrate and the releasing layer, and it imparts a designability to the decorative sheet. The design layer is disposed so as to cover the entire surface of the porous substrate, as viewed from the thickness direction, and includes at least a polar group containing resin layer including a resin including any one or more polar groups of a hydroxy group, an amino group and a carboxy group.

### (i) Polar group containing resin layer

The polar group containing resin layer is disposed so as to cover the entire surface of the porous substrate, as viewed from the thickness direction, and includes a resin including any one or more polar groups of a hydroxy group, an amino group and a carboxy group. The polar group containing resin layer does not inhibit the permeation of uncured resin such as melamine resin having hydrophilicity, and by disposing such polar group containing resin layer so as to cover the entire surface of the porous substrate, the degree of freedom in the pattern of the releasing layer can be improved, and as a result, the designability can be improved.

As shown in FIG. 1(a) and FIG. 1(c), the polar group containing resin layer may be a solid layer x including the resin including a polar group, and as shown in FIG. 1(b) and FIG. 1(d), the polar group containing resin layer may be a layer wherein a plurality of pattern layers y1 and y2, including the resin including a polar group, are disposed next to each other so as to cover the entire surface of the porous substrate 1. In the present disclosure, the solid layer means a layer formed over the entire surface of the porous substrate, as view from the thickness direction. Also, the pattern layer means a layer formed partially (especially in a pattern) so as to cover a part of the porous substrate, as view from the thickness direction.

Also, when the decorative sheet is viewed from the thickness direction, the polar group containing resin layer is disposed so as to cover the entire surface of the porous substrate. The entire surface of the porous substrate refers to, based on the portion that functions as the decorative sheet among the surface of the porous substrate, the region of 90% or more thereof. Based on the portion that functions as the decorative sheet among the surface of the porous substrate, the polar group containing resin layer may be disposed so as to cover 95% or more thereof, and may be disposed so as to cover 100% thereof.

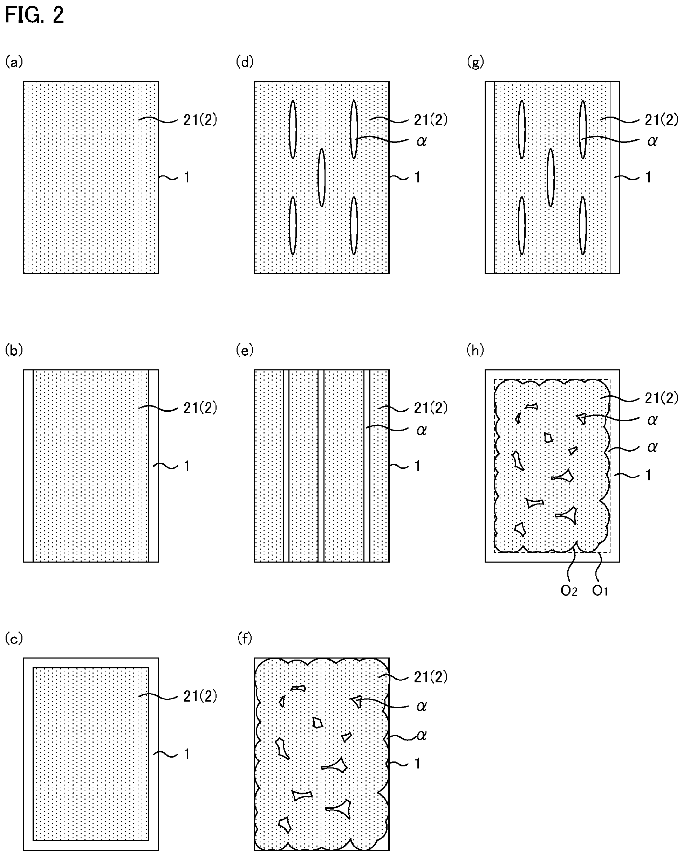

The condition where "the polar group containing resin layer is disposed so as to cover the entire surface of the porous substrate" is explained more specifically, referring to some examples. As shown in FIG. 2(a), viewing from the thickness direction, when the porous substrate 1 is completely covered by the polar group containing resin layer 21, the polar group containing resin layer 21 is disposed so as to cover the entire surface of the porous substrate 1 (100% of the portion that functions as the decorative sheet). Also, as shown in FIG. 2(b), viewing from the thickness direction, when both ends of the porous substrate 1 are exposed from the design layer 2, the both ends do not function as the decorative sheet. Therefore, the entire surface of the porous substrate 1 is defined, excluding the region that does not function as the decorative sheet. In FIG. 2(b), the polar group containing resin layer 21 is disposed so as to cover the entire surface of the porous substrate 1 (100% of the portion that functions as the decorative sheet). Similarly, as shown in FIG. 2(c), viewing from the thickness direction, when the outer periphery of the porous substrate 1 is located on the outer side than the outer periphery of the design layer 2 for the whole circumference, the region of the porous substrate 1, exposed from the design layer 2, does not function as the decorative sheet. Therefore, the entire surface of the porous substrate 1 is defined, excluding the region that does not function as the decorative sheet. In FIG. 2(c), the polar group containing resin layer 21 is disposed so as to cover the entire surface of the porous substrate 1 (100% of the portion that functions as the decorative sheet).

Meanwhile, in FIG. 2(d), viewing from the thickness direction, the entirety of the surface of the porous substrate 1 function as the decorative sheet. Meanwhile, on the inner side than the outer periphery of the polar group containing resin layer 21, there is a region α wherein the polar group containing resin layer 21 is not formed (for example, an uncoated portion produced for the purpose of design expression). In this case, when the total area of the region α is less than 10% with respect to the surface of the porous substrate 1 (the portion that functions as the decorative sheet), it can be said that "the polar group containing resin layer is disposed so as to cover the entire surface of the porous substrate". Also, in FIG. 2(e), viewing from the thickness direction, the entirety of the surface of the porous substrate 1 function as the decorative sheet. Meanwhile, there is a region α wherein the polar group containing resin layer 21 is not formed (for example, an uncoated portion produced for the purpose of design expression), so as to divide the polar group containing resin layer 21. In this case, when the total area of the region α is less than 10% with respect to the surface of the porous substrate 1 (the portion that functions as the decorative sheet), it can be said that "the polar group containing resin layer is disposed so as to cover the entire surface of the porous substrate". Similarly, in FIG. 2(f), viewing from the thickness direction, the entirety of the surface of the porous substrate 1 function as the decorative sheet. Meanwhile, there is a region α wherein the polar group containing resin layer 21 is not formed. In this case, when the total area of the region α is less than 10% with respect to the surface of the porous substrate 1 (the portion that functions as the decorative sheet), it can be said that "the polar group containing resin layer is disposed so as to cover the entire surface of the porous substrate".

Also, as shown in FIG. 2(g), viewing from the thickness direction, when both ends of the porous substrate 1 are exposed from the design layer 2, the both ends do not function as the decorative sheet. Therefore, the entire surface of the porous substrate 1 is defined, excluding the region that does not function as the decorative sheet. In FIG. 2(g), on the inner side than the outer periphery of the polar group containing resin layer 21, there is a region α wherein the polar group containing resin layer 21 is not formed (for example, an uncoated portion produced for the purpose of design expression). In this case, when the total area of the region α is less than 10% with respect to the portion that functions as the decorative sheet among the surface of the porous substrate 1, it can be said that "the polar group containing resin layer is disposed so as to cover the entire surface of the porous substrate". Also, as shown in FIG. 2(h), viewing from the thickness direction, when the outer periphery of the porous substrate 1 is located on the outer side than the outer periphery O₁ of the design layer 2 for the whole circumference, the region of the porous substrate 1, exposed from the design layer 2 on the outer side than the outer periphery O₁, does not function as the decorative sheet. Therefore, the entire surface of the porous substrate 1 is defined, excluding the region that does not function as the decorative sheet. As shown in FIG. 2(h), when the outer periphery O₂ of the design layer 2 has a complex shape, the outer periphery O₁ of a square is set so that the area of the design layer 2 is maximized. Also, in FIG. 2(h), there is a region α wherein the polar group containing resin layer 21 is not formed. In this case, when the total area of the region α is less than 10% with respect to the portion that functions as the decorative sheet among the surface of the porous substrate 1, it can be said that "the polar group containing resin layer is disposed so as to cover the entire surface of the porous substrate".

The polar group containing resin layer in the present disclosure includes a resin component. The resin component may have a function as the binder resin. As the resin component, the polar group containing resin layer in the present disclosure includes the resin including any one or more polar group of hydroxyl group, amino group, and carboxyl group. By including the resin including a polar group, the impregnation property of the uncured resin with respect to the porous substrate is improved.

As the polar group, the resin including a polar group includes any one or more of hydroxyl group (-OH), amino group (-NH₂), and carboxyl group (-COOH). The polar group may be ionized and stabilized, for example, due to the influence of solvents and other functional group. Therefore, the "hydroxy group (-OH)" is a concept containing "-O⁻" in the ionized state, the "amino group (-NH₂)" is a concept containing "-NH₃⁺" in the ionized state, and the "carboxy group (-COOH)" is a concept containing "-COO⁻" in the ionized state.

The resin including a polar group is preferably a resin that is dissolved or dispersed in water, methanol or ethanol. The reason therefor is to improve the impregnation property of uncured resins such as melamine resin having hydrophilicity. Here, "dissolved or dispersed in water, methanol or ethanol" means satisfying certain criteria in the following test. That is, the following operations are carried out according to Section 3.2 of JIS K8001:2017.
1) As solvent, 100 ml of water, methanol or ethanol are respectively prepared.
2) Under condition of 20°C ± 5°C, 0.1 g of respective resin (0.1 ml in the case of liquid) are added to the respective solvents.
3) The resultants are shaken strongly for 30 seconds in every 5 minutes.
4) After shaking strongly for 30 seconds after 30 minutes, let is stand for 1 minute, and when the following phenomenon are not confirmed visibly, it is determined as "dissolved or dispersed".
   · There is a precipitation of solids on the bottom of the container.
   · Phase separation (oil droplets) of the solvent and resin occurs on the top surface of the solvent, in the solvent or on the bottom of the container.

Examples of the resin including any one or more of hydroxy group (-OH), amino group (-NH₂) and carboxy group (-COOH) may include aqueous proteins such as casein; cellulose derivatives typified by, for example, cellulose, acetylcellulose, nitrocellulose, hydroxypropyl cellulose, and carboxymethylcellulose; polyvinyl alcohol derivatives such as polyvinyl alcohol and polyvinyl butyral resins; amino based resins such as melamine resins; (meth) acrylic acid based resins; phenolic resins; acrylic polyols; and natural polymers (such as polynucleotides, polypeptides, and polysaccharides).

As the resin including a polar group, the polar group containing resin layer in the present disclosure preferably includes any one of caseins, melamine based resins, polyvinyl alcohol, polyvinyl alcohol derivatives, cellulose and cellulose derivatives, and more preferably includes caseins. As the casein, α-casein, β-casein, γ-casein, or a mixture thereof may be used. Also, as the casein, the derivatives typified by casein sodium and casein ammonium can be used alone or in a combination.

The contact angle with respect to pure water, of the design layer exposed from the releasing layer, as view from the thickness direction, is preferably low. The reason therefor is to improve the impregnation property of uncured resins such as melamine resin having hydrophilicity. The contact angle with respect to pure water is determined by the following method. In other words, the decorative sheet is placed on a horizontal surface so that the design layer and releasing layer are on the upper surface. Then, a water droplet (pure water, 2.0 µL) is dripped onto the design layer on the horizontal surface, from the perpendicular direction. At this time, the water droplet is not dripped on the boundary between the design layer and the releasing layer, but is dripped so that all the water droplets come into contact with the design layer. After dripping the droplet, wait for one second and the contact angle between the design layer and the pure water is measured with a contact angle meter (Fully automatic contact angle meter DMo-702, Kyowa Interface Science Co., Ltd). The above measurement is carried out at arbitrary 10 locations, and the average value thereof is regarded as the contact angle with respect to pure water. The contact angle with respect to pure water may be 80° or less, may be 60° or less, and may be 40° or less. Meanwhile, the contact angle with respect to water may be 0°. That is, pure water may completely permeate into the decorative sheet.

The wettability of the design layer exposed from the releasing layer, as view from the thickness direction, is preferably high. The reason therefor is to improve the impregnation property of uncured resins such as melamine resin having hydrophilicity. The wettability is determined by the following method.
1) Prepare tension checkers (from Pacific Chemical Co. Ltd.) with dyne numbers of 40 mN/m, 46 mN/m, 50 mN/m, 54 mN/m, 60 mN/m, 67 mN/m, and 70 mN/m, respectively.
2) Draw a line, of 30 cm or more, on the surface of the decorative sheet with the tension checker. At this time, do not draw the line only on the releasing layer, but draw the line so that the drawn line portion includes the design layer on which the releasing layer is not stacked.
3) After drawing the line, stand the decorative sheet still for 2 seconds, and wipe the surface with a dry cloth. Then, visually check the design layer for an ink mark or discoloration due to the tension checker. Carry out this operation for three times for per dye number.
4) Carry out the operations of the above 2) and 3) respectively for each prepared dye number.
5) Among the dye numbers wherein an ink mark or discoloration was observed as the result of 4) above (including a case wherein an ink mark or discoloration was observed, even for only one time out of the three), the one with the highest value is regarded as the wettability of the decorative sheet.

The wettability is, for example, 50 mN/m or more, may be 54 mN/m or more, and may be 60 mN/m or more. Meanwhile, the wettability is, for example, 70 mN/m or less.

The ratio of the resin including a polar group described above, with respect to the resin components included in the polar group containing resin layer is, for example, 20% by mass or more, may be 30% by mass or more, may be 40% by mass or more, and may be 50% by mass or more. Meanwhile, the ratio of the resin including a polar group is, for example, 100% by mass or less, and may be 90% by mass or less. When the content of the resin including a polar group is in the above range, the permeation of the ink of the releasing layer into the porous substrate may further be suppressed, without inhibiting the permeation the uncured resin with respect to the porous substrate.

Also, as the resin component, the polar group containing resin layer may include other resins, in addition to the resin including a polar group described above. Examples of the other resins may include (meth)acrylic based resins, ester urethane based resins, acrylamide based resins, ethylene oxide based resins, N-vinylpyrrolidone based resins, ester based resins, amide based resins, vinyl acetate based resins, vinyl chloride based resins, urethane (meth)acrylic based resins, natural rubbers, and synthetic rubbers. Among them, (meth)acrylic based resins, and urethane(meth)acrylic based resins are preferable.

Also, the polar group containing resin layer may or may not include a colorant. For example, by using a transparent polar group containing resin layer partially or over the entire surface, an expression of a design combining the color of the pattern layer and the color of the substrate is possible. Examples of the colorant may include inorganic pigments such as carbon black, titanium white, zinc flower, Bengal red, ultramarine blue, and cadmium red; organic pigments such as azo pigments, rake pigments, anthraquinone pigments, quinacridone pigments, phthalocyanine pigments, isoindolinone pigments, and dioxidine pigments; metal powder pigments such as aluminum powder and bronze powder; pearlescent pigments such as titanium oxide-coated mica and bismuth oxychloride; fluorescent pigments; and luminous pigments. Dyes may be used as the colorant.

The polar group containing resin layer may include additives, such as fillers (such as silica), extender pigments (such as organic beads), neutralizers, and surfactants, if necessary.

The polar group containing resin layer may have a single layer structure, and may have a multiple layer structure including a plurality of stacked layers.

When the polar group containing resin layer includes the pattern layer, examples the pattern (design) in the pattern layer may include stone-grain patterns, sand-grain patterns, tile laying patterns, wood-grain patterns, brick laying patterns, fabric-grain patterns, leather tie-dyed patterns, geometric shapes, letters, symbols, abstract patterns, and plant and flower patterns.

Examples of the method for forming a polar group containing resin layer may include applying methods using an ink for a polar group containing resin layer including at least a resin component including the resin including a polar group, a colorant, an additive and a solvent (or a dispersant). For example, a polar group containing resin layer is obtained by coating one surface of a porous substrate with the ink for forming a polar group containing resin layer, and drying.

Examples of the solvent (or dispersant) may include petroleum based organic solvents such as hexane, heptane, octane, toluene, xylene, ethylbenzene, cyclohexane, and methylcyclohexane; ester based organic solvent such as ethyl acetate, butyl acetate, 2-methoxyethyl acetate, and 2-ethoxyethyl acetate; alcoholic based organic solvents such as methyl alcohol, ethyl alcohol, normal propyl alcohol, isopropyl alcohol, isobutyl alcohol, ethylene glycol, and propylene glycol; ketone base organic solvents such as acetone, methyl ethyl ketone, methyl isobutyl ketone, and cyclohexanone; ether based organic solvents such as diethyl ether, dioxane, and tetrahydrofuran; chloride based organic solvents such as dichloromethane, carbon tetrachloride, trichloro ethylene, and tetrachloro ethylene; and inorganic solvents such as water.

Also, examples of the coating method for forming the polar group containing resin layer may include various coating methods such as roll coating method, knife coating method, air knife coating method, die coating method, lip coating method, comma coating method, kiss coating method, flow coating method, and dip coating method; and various printing methods such gravure printing method, offset printing method, screen printing method, flexographic printing method, electrostatic printing method, and inkjet printing method.

The thickness of the polar group containing resin layer is not particularly limited, and is, for example, 0.1 µm or more, preferably 0.5 µm or more, and more preferably be 1 µm or more. Meanwhile, the thickness of the polar group containing resin layer is, for example, 6 µm or less, and preferably 4 µm or less. When the thickness of the polar group containing resin layer is the above value or more, permeation of the ink of the releasing layer into the porous substrate may further be suppressed. When the thickness of the polar group containing resin layer is the above value or less, the impregnation property of the uncured resin is further improved. The thickness of the polar group containing resin layer is the average value of the thickness measured at 10 locations by observing the cross-section, obtained by cutting the decorative sheet in the thickness direction, with an optical microscope.

The applying amount (basis weight) of the polar group containing resin layer is not particularly limited, and is, for example, 0.1 g/m² or more, and preferably 0.5 g/m² or more. When the applying amount of the polar group containing resin layer is the above value or more, permeation of the ink of the releasing layer into the porous substrate may further be suppressed. Meanwhile, applying amount (basis weight) of the polar group containing resin layer is preferably, for example, 10 g/m² or less, and preferably 5 g/m² or less. When the applying amount of the polar group containing resin layer is the above value or less, the impregnation property of the uncured resin is further improved.

### (ii) Other layers

The design layer in the present disclosure may include other layers other than the polar group containing resin layer described above (a layer including the resin including a polar group, and disposed so as to cover the entire surface of the porous substrate). Typical examples of the other layer may include a pattern layer. For example, the decorative sheet 10 shown in FIG. 1(c) includes a solid layer x including the resin including a specific polar group as the polar group containing resin layer 21, and includes a pattern layer y3 as the other layer 22 other than the polar group containing resin layer 21. As the polar group containing resin layer 21, the decorative sheet 10 shown in FIG. 1(d) includes a layer wherein a plurality of pattern layers y1 and y2, including the resin including a specific polar group, are disposed next to each other so as to cover the entire surface of the porous substrate; and as the other layer 22 other than the polar group containing resin layer 21, a pattern layer y3 is included. The pattern layer y3 may or may not include the resin including a specific polar group described above.

In the present disclosure, when the design layer includes other layer, other than the polar group containing resin layer, the polar group containing resin layer is preferably disposed on the porous substrate side, and the other layer is preferably disposed on the releasing layer side. In other words, the polar group containing resin layer is preferably disposed between the other layer and the porous substrate. Meanwhile, the polar group containing resin layer may be disposed on the releasing layer side, and the other layer may be disposed on the porous substrate side.

The pattern layer as the other layer includes, for example, a resin component. The resin component may have a function as the binder resin. As the resin component, the pattern layer preferably includes the resin including a polar group. When the pattern layer includes the resin including a polar group, the ratio of the resin including a polar group described above, with respect to the resin components included in the pattern layer is, for example, 20% by mass or more, may be 30% by mass or more, may be 40% by mass or more, and may be 50% by mass or more. Meanwhile, the ratio of the resin including a polar group described above is, for example, 100% by mass or less, and may be 90% by mass or less. Examples of the resin including a polar group, included in the pattern layer, may include those similar to examples described for the polar group containing resin layer described above. As the resin component, the pattern layer may include other resins, in addition to the resin including a polar group described above. Examples of the other resin may include those similar to examples described for the polar group containing resin layer.

The pattern layer as the other layer may not include the resin including a polar group. In this case, as the resin component, the pattern layer may include other resins described above. Also, for example, a reactant (cured product) of the resin including a polar group and a curing agent may be included as the resin component. Examples of the curing agent may include isocyanate based curing agents, and epoxy based curing agents.

The pattern layer as the other layer includes, for example, a colorant. Examples of the colorant may include those similar to examples described for the polar group containing resin layer described above. The pattern layer may include additives, such as fillers (such as silica), extender pigments (such as organic beads), neutralizers, and surfactants, if necessary.

Examples of the method for forming a pattern layer as the other layer may include applying methods using an ink for forming a pattern layer including a resin component, a colorant, an additive, and a solvent (or a dispersant). For example, a pattern layer is obtained by coating the surface of the polar group containing resin layer that is opposite to the porous substrate with the ink for forming a pattern layer; drying; and curing if necessary. Examples of the solvent (or dispersant) may include those similar to examples described for the polar group containing resin layer described above.

The thickness of the pattern layer is not particularly limited, and is, for example, 0.5 µm or more, preferably 1 µm or more, and may be 2 µm or more. Meanwhile, the thickness is preferably 6 µm or less, and may be 4 µm or less.

### (iii) Design layer

The thickness of the design layer in the present disclosure is not particularly limited, and is preferably 0.1 µm or more and 10 µm or less, more preferably 0.5 µm or more and 6 µm or less, and particularly preferably 1 µm or more and 4 µm or less. When the thickness of the design layer is the above value or more, permeation of the ink of the releasing layer into the porous substrate may further be suppressed. When the thickness of the design layer is the above value or less, the impregnation property of the uncured resin is further improved. When the design layer is a single layer, the thickness of the design layer refers to the thickness of the layer, and when the design layer is a stacked body of a plurality of layers, the thickness refers to the total thickness of the respective layers. Also, the thickness of the design layer is the average value of the thickness measured at 10 locations by observing the cross-section, obtained by cutting the decorative sheet in the thickness direction, with an optical microscope.

### (2) Releasing layer

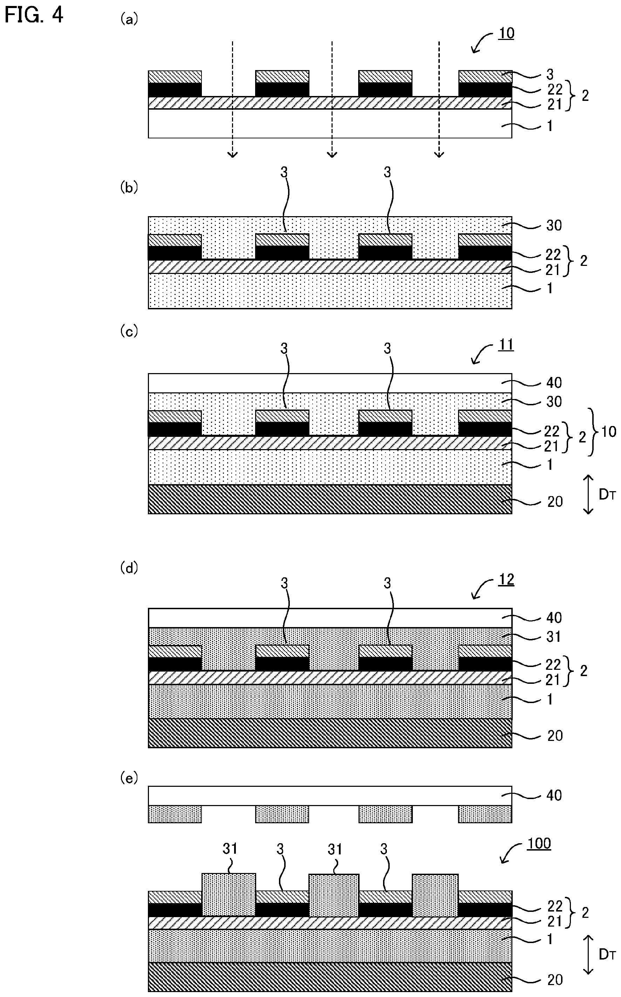

The releasing layer in the present disclosure is disposed on a surface of the design layer that is opposite side to the porous substrate, and has a patterned shape. When the design layer includes the pattern layer, at least a part of the releasing layer is preferably disposed on the surface of the pattern layer that is opposite to the porous substrate side. In the production process of a resin-impregnated decorative plate which will be described later, the releasing layer has the ability to release with respect to the cured resin layer disposed between the releasing layer and the release film. By having such ability to release, for example, in the resin-impregnated decorative plate 100 shown in FIG. 4(e) produced using the decorative sheet in the present disclosure, the cured resin layer 31 gives a gloss tone design, and the releasing layer 3 gives a matte tone design, so that a clear gloss-matte tone design can be expressed.

Also, the releasing layer is preferably disposed so that it is aligned with the pattern of the pattern layer. "Aligned with" means that the shape and position of the two patterns of interest roughly conform with each other. Specifically, it means that the shape and position of the pattern of the releasing layer and at least a part of the pattern constituting the pattern of the pattern layer match to the extent that it does not impair the sense of realism and luxury. By disposing the pattern of the releasing layer so as to align with the pattern of the pattern layer, a high texture can be obtained.

The releasing layer includes a resin component. The resin component is typically a cured product (cross-linked structure) of a curable resin. Incidentally, in the present disclosure, the curable resin in the releasing layer may be referred to as curable resin X. Meanwhile, the resin component may be thermoplastic resin. Particularly, the releasing layer preferably includes a cured product of a curable resin. The reason therefor is to obtain a releasing layer with good wear resistance. Also, when the releasing layer includes the cured product of a curable resin, ability to release with respect to the cured resin layer is improved.

Examples of the curable resin may include ionizing radiation curable resins and thermosetting resins. Examples of the ionizing radiation curable resin may include electron beam curable resins, and ultraviolet ray curable resins.

The ionizing radiation curable resin (ionizing radiation curable compound) is not limited to as long as it is material that generates cross-linking polymerization reaction by irradiation of ionizing radiation and changes into a three-dimensional polymer structure. Examples of the ionizing radiation curable resin may include prepolymers, oligomers and monomers, including polymerizable unsaturated bonds or epoxy groups in the molecule, capable of being cross-linked by irradiation of ionizing radiation.

In the present disclosure, one type of the ionizing radiation curable resin may be used alone, and two types or more may be used. Particularly, as the ionizing radiation curable resin, at least one of a multifunctional monomer and oligomer is preferably used.

Examples of the ionizing radiation curable resin may include (meth)acrylate based resins such as urethane(meth)acrylate, ester(meth) acrylate, and epoxy(meth)acrylate; silicon based resins such as siloxane; ester based resins; and epoxy based resins. The (meth)acrylate based resin refers to an acrylate based resins or a methacrylate based resins.

The weight average molecular weight of the ionizing radiation curable resin is, for example, 500 or more and 80,000 or less, and may be 1,000 or more and 50,000 or less. The weight average molecular weight is a value measured by gel permeation chromatography (GPC) method, using polystyrene as the reference material.

As the ionizing radiation curable resin, at least a multifunctional monomer or oligomer, with a weight average molecular weight of 500 or more, is preferably included. Examples of such multifunctional monomer or oligomer may include (meth)acrylate based resins such as dipentaerythritol hexa(meth)acrylate, dipentaerythritol penta(meth)acrylate, urethane(meth)acrylate, ester(meth)acrylate, and epoxy(meth)acrylate.

Meanwhile, examples of the thermosetting resins may include unsaturated ester based resins, urethane based resins (including two-liquid curing type polyurethane), epoxy based resins, aminoalkyd based resins, phenolic based resins, urea based resins, diallylphthalate based resins, melamine based resins, guanamine based resins, melamine urea co-condensation based resins, and silicon based resins and siloxane based resins.

The releasing layer may include a matting agent. Examples of the matting agent may include inorganic particles and synthetic resin particles. Examples of the inorganic particles may include silica, alumina, calcium carbonate, magnesium carbonate, calcium sulfate, barium sulfate, and kaolin. Examples of the synthetic resin particles may include acrylic beads, urethane beads, nylon beads, silicone beads, silicone rubber beads, polycarbonate beads, and polyolefin wax (such as polypropylene wax, polyethylene wax).

The average particle size of the matting agent is, for example, 0.3 µm or more and 10 µm or less, may be 0.5 µm or more and 7 µm or less, and may be 1 µm or more and 5 µm or less. The average particle size is D50 in the volume-based particle size distribution measured by a laser diffraction scattering method. The content of the matting agent is, for example, 5 parts by mass or more and 40 parts by mass or less, and may be 10 part by mass or more and 35 parts by mass or less, with respect to 100 parts by mass of the resin components in the releasing layer.

The releasing layer may include a releasing agent. The ability to release is improved by adding the releasing agent. Examples of the releasing agent may include silicone based releasing agents such as silicone oil; wax based releasing agents such as polyolefin wax; and fluorine based releasing agents. The silicone oils may be a reactive silicone oil, and may be a non-reactive silicone oil.

Among the modified silicone oil to which an organic group is introduced to the side chain or at the terminal, the reactive silicone oil refers to one that is reactive depending on the behavior of the introduced organic group. For example, in side-chain-type modified silicone oil, both-terminal-type modified silicone oil, one-terminal-type modified silicone oil, and side-chain both-terminal-type modified silicone, specific examples of the reactive silicone oil may include ones wherein the introduced organic group is amino-modified, epoxy-modified, mercapto-modified, carboxyl-modified, carbinol-modified, phenol-modified, methacryl-modified, and dissimilar functional group-modified. These reactive silicone oils may be used alone, and two or more types may be used as a mixture.

The non-reactive silicone oil is not particularly limited as long as it is a silicone oil not including a reactive functional group such as amino group, epoxy group, mercapto group, carboxy group, hydroxy group, (meth)acryloyl group, and allylic group. In addition to silicone oils including polysiloxane, examples of the non-reactive silicone oil may include polyether modified silicone oil, aralkyl modified silicone oil, fluoroalkyl modified silicone oil, long-chain alkyl modified silicone oil, higher fatty acid ester modified silicone oil, higher fatty acid amide modified silicone oil, and phenyl modified silicone oil. These non-reactive silicone oils may be used alone, and two or more types may be used as a mixture.

The content of the releasing agent is, for example, 0.1 parts by mass or more and 50 parts by mass or less, may be 0.5 part by mass or more and 20 parts by mass or less, may be 3 part by mass or more and 20 parts by mass or less, and may be 3 parts by mass or more and 10 parts by mass or less, with respect to 100 parts by mass of the resin components in the releasing layer. Also, the releasing layer may be colorless, and may be colored. In the latter case, the releasing layer preferably includes a colorant. As for the colorant, those similar to the colorant used in the pattern layer, which will be described below, may be used.

If necessary, the releasing layer may include an additive such as ultraviolet ray absorbers, infrared ray absorbers, photostabilizers, polymerization inhibitors, crosslinkers, antistatic agents, antioxidants, leveling agents, coupling agents, plasticizers, antifoaming agents, fillers, thermal radial generating agents, and aluminum chelating agents. The thickness of the releasing layer is not particularly limited, and it is, for example, 0.1 µm or more and 20 µm or less. Also, viewing the decorative sheet from the thickness direction, when the area of the releasing layer is regarded as S₁, and the area of the design layer is regarded as S₂, the ratio (S₁/S₂) of the area S₁ with respect to S₂ is, for example, 5% or more, and may be 10% or more. Meanwhile, S₁/S₂ is, for example, 80% or less, may be 70% or less, and may be 60% or less.

The releasing layer is obtained by, for example, applying an ink for forming a releasing layer, including curable resin, to the surface of the design layer that is opposite to the porous substrate, and curing thereof.

When the ink for forming a releasing layer includes an electron beam curable resin, a cured product of the electron beam curable resin is usually obtained by irradiating an electron beam. Examples of the electron beam source may include various electron beam accelerators such as Cockcroft-Walton type, Van de Graaff type, resonant transformer type, insulated core transformer type, linear type, dynamitron type, and high frequency type. The energy of the electron beam is, for example, 100 kV or more and 1000 kV or less, and may be 100 kV or more and 300 kV or less. The irradiating amount of the electron beam is, for example, 2 Mrad or more and 15 Mrad or less.

When the ink for forming a releasing layer includes an ultraviolet ray curable resin, a cured product of the ultraviolet ray curable resin is usually obtained by irradiating an ultraviolet ray. Examples of the ultraviolet ray source may include an ultra-high pressure mercury lamp, a high pressure mercury lamp, a low pressure mercury lamp, a carbon arc lamp, a black light fluorescent lamp, and a metal halide lamp. The wavelength of the ultraviolet ray is, for example, 190 nm or more and 380 nm or less.

When the ink for forming a releasing layer includes a thermosetting resin, a cured product of the thermosetting resin is usually obtained by heating. The heating temperature is appropriately set according to the type of the thermosetting resin. The ink for forming a releasing layer may include a thermosetting resin, as well as curing agents and polymerization accelerators such as cross-linking agents, and polymerization initiators. Examples of the curing agent may include isocyanates, organosulfonates, organoamines, peroxides (such as methyl ethyl ketone peroxide), and radical initiators (azoisobutyronitrile).

The ink for forming a releasing layer may include solvents as necessary. Examples of the solvent may include water; hydrocarbon compounds such as toluene and xylene; alcoholic compounds such as methanol, ethanol, methyl glycol; ketone compounds such as acetone and methyl ethyl ketone; ester compounds such as methyl formate and ethyl acetate; nitrogen containing compounds such as N-methylpyrrolidone, N,N-dimethylformamide; ether compounds such as tetrahydrofuran and dioxane; halogenated hydrocarbon compounds such as methylene chloride and chloroform; and dimethylsulfoxide. The ink for forming a releasing layer preferably has lower hydrophilicity than the uncured resins such as melamine resins having hydrophilicity.

### (3) Porous substrate

The porous substrate in the present disclosure is a substrate into which uncured resin (curable resin Y) is impregnated, during the production of the resin-impregnated decorative plate. Examples of the porous substrate may include permeable fibrous substrates. Examples of the permeable fibrous substrate may include paper, synthesized paper, non-woven fabric and woven fabric. Examples of the paper may include titanium paper, tissue paper, kraft paper, linter paper, paperboard, gypsum board paper, high-quality paper, coated paper, parchment paper, and Japanese paper. Also, vinyl wallpaper webs (paper dry laminated with polyvinyl chloride resin) can be used as the fibrous substrate. Other examples of the fibrous substrates may include non-woven or woven fabrics including inorganic fibers such as glass fibers, asbestos, potassium titanate fibers, alumina fibers, silica fibers, and carbon fibers. Also, other examples of the fibrous substrate may include non-woven or woven fabrics including synthetic resin fibers such as polyester, vinylon, polyethylene and polypropylene. Among these porous substrates, titanium paper, tissue paper, kraft paper, coated paper, art paper, vegetable parchment paper, glassine paper, parchment paper, paraffin paper, and Japanese paper are preferable in view of the impregnation property of the uncured resin. In particular, the titanium paper is preferable as the porous substrate because of its excellent impregnation property of uncured resin and excellent hiding property.

The porous substrate may be colored. For example, a colored porous substrate is obtained by blending a colorant at the stage of production of the porous substrate. For example, when the porous substrate is paper, colored paper can be obtained by mixing a colorant at the papermaking stage. Examples of the colorant may include inorganic pigments such as titanium dioxide, carbon black, iron oxide; organic pigments such as phthalocyanine blue; and various dyes. Also, the content of the colorant is appropriately set according to the desired tint. Particularly, the colorant used for the porous substrate constituting the decorative sheet in the present disclosure is required to have a function to adjust the color of the porous substrate; and a function to adjust the permeability of the porous substrate. Since the color of the porous substrate greatly depends on the product design of the objective decorative sheet, particularly on the desired design expression, the type and content of the colorant are set so that the ash content described later is in a predetermined range, that is, to adjust the permeability of the porous substrate, while realizing the color. Also, the porous substrate may include various additives such as fillers, frosting agents, foaming agents, flame retardants, lubricants, antistatic agents, antioxidants, ultraviolet ray absorber and photostabilizers, if necessary.

The basis weight of the porous substrate is not particularly limited, and is, for example, 40 g/m² or more and 150 g/m² or less. The thickness of the porous substrate is not particularly limited, and it is, for example, 50 µm or more and 170 µm or less. For example, in order to improve the close adhesiveness of the ink for forming the design layer, the design layer side surface of the porous substrate may be subjected to a corona discharge treatment.

### 2. Ash content

In the present disclosure, the ash content included in the decorative sheet is 15% by mass or more, preferably 20% by mass or more, and more preferably 25% by mass or more. The ratio of the ash content is similar to the content ratio of the decorative sheet, mainly inorganic materials, such as pigments, included in the porous substrates. When the ash content is too low, the porous substrate will include less gap so that the impregnation property of the uncured resin will deteriorate. Meanwhile, the ash content is 40% by mass or less, and preferably 30% by mass or less. When the ash content is too high, the porous substrate will include more gap; the ink constituting the releasing layer will permeate into the porous substrate too much; the function of peeling the impregnated resin in the subsequent process will be insufficient; and the gloss matte design cannot be stably exhibited.

The ash content in the present disclosure is the value measured by the following measurement method and measurement conditions.

### <Method for measuring>

From the decorative sheet, a measurement sample of approximately 5 mg is cut out. Using the following simultaneous thermogravimetry/differential thermal analyzer, the temperature is raised from room temperature to 30°C at a raising rate of 10°C/minute and held at 30°C for 15 minutes, under the following conditions. Then, the temperature is raised to 120°C at a raising rate of 10°C/minute and held at 120°C for 30 minutes. Then, the temperature is raised to 600°C at a raising rate of 10°C/minute and held at 600°C for 30 minutes. Thereby, an ashing of the measurement sample is carried out.

### <Measurement device and device conditions>

- Device: DTG-60A (TG-DTA)
- Atmospheric gas: Air
- Gas flow rate: 175 [ml/min]
- Initial mass: Approximately 5 mg (cut out decorative sheet)
- Temperature raising program
Room temperature → raised temperature (10°C/minute) → 30°C, held for 15 minute → raised temperature (10°C/minute) → 120°C, held for 30 minute → raised temperature (10°C/minute) → 600°C, held for 30 minute → completed

As shown in the following calculating formula, the ash content in the present disclosure is a value expressed in a percentage of the mass of the sample after holding at 600°C for 30 minutes, with respect to the mass of the sample after holding at 120°C for 30 minutes, in the temperature raising program. Ash content (%) = (mass of sample [mg] after holding at 600°C for 30 minutes/mass of the sample [mg] after holding at 120°C for 30 minutes) × 100

The decorative sheet in the present disclosure is used for a production of a resin-impregnated decorative plate. Since the resin-impregnated decorative plate will be described later, description herein is omitted.

### 3. Impregnation amount

When an impregnation property test using melamine resin is carried out to the decorative sheet in the present disclosure, the impregnation amount of the melamine resin, into the decorative sheet, is for example, 35 g/m² or more, and may be 45 g/m² or more. Meanwhile, the impregnation amount of the melamine resin, into the decorative sheet, is for example, 80 g/m² or less, and may be 60 g/m² or less. The details of the impregnation property test will be described in the following Examples.

### B. Resin-impregnated decorative plate

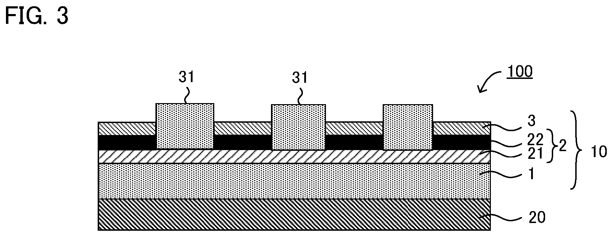

The resin-impregnated decorative plate in the present disclosure will be hereinafter described in detail. FIG. 3 is a schematic cross-sectional view exemplifying the resin-impregnated decorative plate in the present disclosure. The resin-impregnated decorative plate 100 shown in FIG. 3 includes the decorative sheet 10 described above, a core substrate 20 disposed so as to face the porous substrate 1 of the decorative sheet; and a cured resin layer 31 disposed between the patterns of the releasing layer 3, and including a cured product of curable resin Y, wherein the porous substrate 1 includes the cured product of the curable resin Y.

### 1. Decorative sheet

The details of the decorative sheet are as described above.

### 2. Core substrate

The resin-impregnated decorative plate in the present disclosure includes a porous core substrate 20 on the porous substrate 1 side surface of the decorative sheet 10 (the surface of the decorative sheet 10 located on the porous substrate 1 side, based on the design layer 2). Examples of the core substrate 20 may include phenol resin-impregnated paper. The phenol resin-impregnated paper is a paper obtained by, for example, impregnating phenolic resin into a kraft paper, that is a core paper, and drying it.

### 3. Cured product of curable resin Y and cured resin layer

The porous substrate in the present disclosure includes a cured product of a curable resin **Y.** The resin-impregnated decorative plate includes a cured resin layer disposed between the patterns of the releasing layer. The cured product of curable resin Y filled into the porous substrate; and the cured product of curable resin Y included in the cured resin layer are formed with the same curable resin Y, as described later.

As the curable resins Y, thermosetting resins may be used widely. Examples of the curable resin Y may include melamine based resins (melamine based resin precursors), melamine-urea co-condensate based resins, unsaturated polyester based resins, polyurethane based resin (including two-liquid curing type polyurethane), epoxy based resins, aminoalkyd based resins, phenolic based resins, urea based resins, diallylphthalate based resins, guanamine based resins, silicon based resins and polysiloxane based resins.

The thickness of the cured resin layer is not particularly limited, and is, for example, 1 µm or more, and may be 10 µm or more. Meanwhile, the thickness of the cured resin layer is, for example, 500 µm or less, and may be 300 µm or less. The thickness of the cured resin layer is preferably more than the thickness of the releasing layer.

That is, the cured resin layer preferably protrudes from the releasing layer in the thickness direction.

The resin-impregnated decorative plate in the present disclosure is used, for example, by disposing thereof on the surface of a base member. Examples of the base member may include woody members, resin members, metal members, and ceramic members. Examples of the woody member may include wood single panel, plywood panel, particle board, and woody fiberboard. Examples of the wood used for the woody member may include cedar, hinoki cypress, pine, and lauan. Examples of the resin used for the resin member may include vinyl chloride based resins, (meth)acrylic based resins, ester based resins, styrene based resins, olefin based resins, acrylonitrile-butadiene-styrene copolymers (ABS based resins), phenolic based resins, cellulose based resins, carbonate based resins, melamine based resins, and rubber. Examples of the metal used for the metal member may include iron, and aluminum. The material of the ceramic member may be ceramics such as glass and pottery, may be non-cement ceramic based materials such as gypsum, and may be non-pottery ceramic based materials such as ALC (lightweight aerated concrete).

Examples of the use application of the resin-impregnated decorative plate in the present disclosure may include construction materials and furniture. The construction material may be interior material, and may be exterior material. Examples of the construction material may include wall, floors, ceilings, doors, and shelves. Examples of furniture may include tables, desks and cabinets.

### C. Method for producing resin-impregnated decorative plate

FIGS. 4 are schematic cross-sectional views exemplifying the method for producing a resin-impregnated decorative plate in the present disclosure. Firstly, as shown in FIG. 4(a) and 4(b), the porous substrate 1 of the decorative sheet 10 described above is impregnated with curable resin Y via the design layer 2 (polar group containing resin layer 21) so that the curable resin Y is included in the porous substrate **1,** and a curable resin layer 30 which covers the design layer 2 and releasing layer **3,** is formed.

Then, as shown in FIG. 4(c), a stacked body 11 is produced by disposing a release film 40 on the surface of the curable resin layer 30 that is opposite side to the design layer 2, and disposing a core substrate 20 on the porous substrate 1 side surface of the decorative sheet 10 (the surface of the decorative sheet 10 located on the porous substrate 1 side, based on the design layer 2).

Then, as shown in FIG. 4(d), a cured stacked body 12 is produced by heating and pressurizing the stacked body 11 to cure the curable resin Y, and forming a cured resin layer 31 from the curable resin layer 30. Also, by pressurizing, the surface properties of the release film 40 is reflected onto the surface of the cured resin layer 31.

Then, as shown in FIG. 4(e), release film 40 is peeled off from the cured stacked body 12, and at the same time, the cured resin layer 31, located between the releasing layer 3 and release film 40, is peeled off to the release film 40 side. At this time, the cured resin layer 31 which has not been peeled off to the release film 40 side becomes, for example, a gloss layer. Also, the releasing layer 3 becomes, for example, a matte layer. Thereby, a resin-impregnated decorative plate 100 comprising a core substrate 20, a porous substrate 1, a design layer 2 and a releasing layer 3 in this order in the thickness direction D_{T}, and further comprising a cured resin layer 31 disposed between the patterns of the releasing layer 3, and including a cured product of a curable resin **Y.**

According to the present disclosure, by using the decorative sheet described above, it is possible to obtain a resin-impregnated decorative plate into which an uncured resin that is a precursor of, for example, melamine resin, is well impregnated, and that can stably exhibit a gloss matte design.

### 1. Preparing step

The present step is a step of preparing the decorative sheet. The details of the decorative sheet are as described above.

### 2. Stacked body forming step

As shown in FIG. 4(c), the present step is a step of forming a stacked body 11 (i) including a core substrate 20, the decorative sheet 10, a curable resin layer 30 including a curable resin Y, and a release film 40, in this order in a thickness direction D_{T}, (ii)a porous substrate 1 side surface of the decorative sheet 10 is disposed so as to faces the core substrate 20, and (iii) the decorative sheet 10 is impregnated with the curable resin Y.

The method for forming such stacked body is not particularly limited. For example, as shown in FIG. 4(b), a decorative sheet 10 is impregnated with curable resin Y, covering the design layer 2 and releasing layer 3, and forming a curable resin layer 30 including curable resin Y, and then, as shown in FIG. 4 (c), a release film 40 is disposed so as to face the curable resin layer 30, and further, a core substrate 20 is disposed so as to face the porous substrate 1. Thereby, a stacked body 11 can be obtained.

In the present process, for example, the decorative sheet is immersed into a curable resin composition including the curable resin Y. The decorative sheet is preferably dried after the immersion. At this time, a part of the curable resin may be cured to obtain a semi-cured condition. Examples of the method for impregnating the curable resin Y may include a method wherein a decorative sheet 10 is immersed into a bath including curable resin Y; a method wherein a decorative sheet 10 is coated with curable resin Y by a coater such as a kiss coater or a comma coater; and a method wherein curable resin Y is sprayed onto a decorative sheet 10 by a spray device or a shower device.

The ratio of the curable resin Y in the curable resin composition is, for example, 50 mass% or more, may be 70 mass% or more, and may be 90 mass% or more. As the solvent, the curable resin composition may include, for example, water, alcohol or organic solvents.

Examples of the resin constituting the release film may include polyester resins such as polyethylene terephthalate, and polybutylene terephthalate; polyolefin resins such as polyethylene and polypropylene; and acrylic based resins. The release film may have a releasing layer including a cured product of an ionizing radiation curable resin composition, on the surface facing the curable resin layer.

### 3. Heating and pressurizing step

As shown in FIG. 4(d), the present step is a step of obtaining a cured stacked body 12 by heating and pressurizing the stacked body 11 to cure the curable resin Y, and forming a cured resin layer 31 from the curable resin layer 30. The heating temperature is, for example, 90°C or more and 160°C or less. The applied pressure is, for example, 50 kg/cm² or more and 150 kg/cm² or less. Also, the heating and pressurizing time is, for example, 30 seconds or more and 30 minutes or less.

### 4. Peeling step

As shown in FIG. 4(e), the present step is a step of removing the cured resin layer 31 disposed at a position overlapping with the releasing layer 3 in the thickness direction D_{T}, and remaining the cured resin layer 31 disposed between the patterns of the releasing layer 3, by peeling the release film 40 from the cured stacked body 12. Thereby, a resin-impregnated decorative plate 100 comprising: a porous substrate 1; a design layer 2 disposed on one surface of the porous substrate 1; a releasing layer 3 disposed in a pattern on a surface of the design layer 2 that is opposite side to the porous substrate 1; and a cured resin layer 31 disposed between the patterns of the releasing layer 3 of the porous substrate 1.

### 5. Resin-impregnated decorative plate

The resin-impregnated decorative plate obtained by the respective steps described above is similar to the contents described in "B. Resin-impregnated decorative plate" above.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Example 1]

### (Production of decorative sheet)

Preparing titanium paper with basis weight of 80 g/m² (PM-77P, from KJ Specialty Paper Co., Ltd.) as the porous substrate, and a solid layer (polar group containing resin layer) with a thickness of 1.0 µm was formed so as to cover the entire surface of the porous substrate viewed from the thickness direction, by gravure printing method, using a printing ink for forming a solid layer 1 having the following composition. Further, using a printing ink for forming a pattern layer 1 having the following composition, a pattern layer, having a thickness of 2 µm, was formed on the surface of the polar group containing resin layer that is opposite to the porous substrate so that the layer has a wood-grid design. Incidentally, the ratio of the area of the pattern layer with respect to the area of the porous substrate, viewed from the thickness direction, was adjusted to be 40% or more and 50% or less, for all the Examples and Comparative Examples described below.

### <Printing ink for forming solid layer 1>

- Casein/acrylic based resin (mass ratio 45:55) 10 parts by mass
- Water: 80 parts by mass
- Dipropyl glycol 5 parts by mass
- Isopropyl alcohol 5 parts by mass

### <Printing ink for forming pattern layer 1>

- Pigments (such as azo based, quinacridone based, carbon black) 10 parts by mass
- Casein/acrylic based resin (mass ratio 45:55) 10 parts by mass
- Water: 70 parts by mass
- Dipropyl glycol 5 parts by mass
- Isopropyl alcohol 5 parts by mass

Using a process homogenizer PH91 (from SMT Co., Ltd.), 60 parts by mass of an ionizing radiation curable monomer (Aronix M-400 from Toagosei Ltd.), 4 parts by mass of reactive silicone (X-22-164B from Shin-Etsu Chemical Co., Ltd.), 10 parts by mass of silane coupling-treated silica particles (average particle size of 3.0 µm) and 40 parts by mass of methyl ethyl ketone were stirred for 1 hour at number of revolutions of 2000 rpm to prepare an ink for forming a releasing layer.

Then, a releasing layer having a thickness of 2 µm was formed in a pattern by coating the pattern layer with the ink for forming a releasing layer so as to align with the wood-grain pattern of the pattern layer, and irradiating electron beams of 3 Mrad at an accelerating voltage of 165 kV. Thereby, a decorative sheet including a porous substrate, a design layer (a solid layer and a pattern layer), and a releasing layer in a patter, in this order, was produced.

### (Production of release film)

The easy adhesive surface of a polyethylene terephthalate film (Cosmo Shine (registered trademark) A4160 from Toyobo Co., Ltd.) having a thickness of 50 µm was coated with a coating solution including 100 parts by mass of an ionizing radiation curable monomer (Aronix M-350 from Toagosei Ltd.), 2 parts by mass of a reactive silicone (X-22-164B from Shin-Etsu Chemical Co., Ltd.), 8 parts by mass of silica particles (product name "Sylysia 450" from Fuji Silysia Chemical Ltd., average particle size: 8.0 µm), and 50 parts by mass of ethyl acetate at an amount of 5 g/m² (dried), and electron beams were irradiated at 5 Mrad and an accelerating voltage of 165 kV to cure. Thereby a release film including a releasing layer was produced.

### (Preparation of melamine decorative plate)

Using an impregnation device for impregnation, the produced decorative sheet was impregnated with a liquid uncured melamine resin composition including 60 parts by mass of uncured melamine resin (water-soluble methylol melamine resin, Nikaresin S-260 from Nippon Carbide Industries Co., Inc.), 35 parts by mass of water and 5 parts by mass of isopropyl alcohol so that the ratio of the uncured melamine resin composition was 80 g/m² (dried), and dried to produce an impregnated decorative sheet.

The impregnated decorative sheet was stacked on 3 sheets of phenolic resin-impregnated core paper with a basis weight of 245 g/m² (obtained by impregnating core kraft paper with a liquid uncured resin composition made from phenolic resin) produced by impregnating the kraft paper with the phenolic resin liquid. Further, the release film was stacked on the releasing layer side surface of the impregnated decorative sheet so that the cured resin layer of the release film was in contact with the printed surface of the impregnated decorative sheet, and a stacked body was obtained. The obtained stacked body was sandwiched between two mirror plates, and heat molded using a hot press device, at a pressure of 100 kg/cm², under the conditions of molding temperature of 150°C for 10 minutes to produce a molded body (cured stacked body). In the molded body, a melamine resin layer including cured melamine resin was formed between the releasing layer and the release film.

Among the cured resin layer, the portion that covers the releasing layer was removed by peeling the release film off from the cured resin layer including the cured product of the melamine resin. At the portion where the releasing layer is not provided, the cured resin layer that has not been removed remained as the gloss layer. Thus, a melamine decorative plate was obtained.

### [Example 2]

A decorative sheet was produced and a melamine decorative plate was obtained in the same manner as in Example 1 except that the thickness of the solid layer (polar group containing resin layer) was set to 3.0 µm.

### [Example 3]

A decorative sheet was produced and a melamine decorative plate was obtained in the same manner as in Example 1 except that the thickness of the solid layer (polar group containing resin layer) was set to 0.5 µm.

### [Example 4]

A decorative sheet was produced and a melamine decorative plate was obtained in the same manner as in Example 1 except that the printing ink for forming a solid layer 1 was changed to the following printing ink for forming a solid layer 2, and that the thickness of the solid layer (polar group containing resin layer) was set to 2.0 µm.

### <Printing ink for forming solid layer 2>

- Pigments (such as azo based, quinacridone based, carbon black) 10 parts by mass
- Casein/acrylic based resin (mass ratio 45:55) 10 parts by mass
- Water 70 parts by mass
- Dipropyl glycol 5 parts by mass
- Isopropyl alcohol 5 parts by mass

### [Example 5]

A decorative sheet was produced and a melamine decorative plate was obtained in the same manner as in Example 1 except that the porous substrate was changed to KW801P from KJ Specialty Paper Co., Ltd.

### [Example 6]

A decorative sheet was produced and a melamine decorative plate was obtained in the same manner as in Example 1 except that the porous substrate was changed to PM-28P from KJ Specialty Paper Co., Ltd.

### [Example 7]

A decorative sheet was produced and a melamine decorative plate was obtained in the same manner as in Example 1 except that the printing ink for forming a solid layer 1 was changed to the following printing ink for forming a solid layer 3, and that the thickness of the solid layer (polar group containing resin layer) was set to 2.0 µm.

### <Printing ink for forming solid layer 3>

- Pigments (such as azo based, quinacridone based, carbon black) 10 parts by mass
- Nitrocellulose/alkyd resin (mass ratio 50:50) 10 parts by mass
- Phthalic acid ester 5 parts by mass
- Ethyl acetate 50 parts by mass
- Butyl acetate 15 parts by mass
- Isopropyl alcohol 10 parts by mass

### [Example 8]

A decorative sheet was produced and a melamine decorative plate was obtained in the same manner as in Example 1 except that the printing ink for forming a solid layer 1 was changed to the following printing ink for forming a solid layer 4, and that the thickness of the solid layer (polar group containing resin layer) was set to 2.0 µm.

### <Printing ink for forming solid layer 4>

- Pigments (such as azo based, quinacridone based, carbon black) 10 parts by mass
- Melamine/cellulose acetate/hydroxypropyl cellulose (mass ratio 10:60:30) 5 parts by mass
- Propylene glycol monomethyl ether 45 parts by mass
- Methylethyl ketone 15 parts by mass
- Cyclohexanone 25 parts by mass

### [Example 9]

A decorative sheet was produced and a melamine decorative plate was obtained in the same manner as in Example 1 except that the printing ink for forming a solid layer 1 was changed to the following printing ink for forming a solid layer 5, and that the thickness of the solid layer (polar group containing resin layer) was set to 2.0 µm.

### <Printing ink for forming solid layer 5>

- Pigments (such as azo based, quinacridone based, carbon black) 15 parts by mass
- Polyvinyl butyral resin 5 parts by mass
- Extender pigments (such as calcium carbonate and silica) 5 parts by mass
- Butyl acetate 35 parts by mass
- N-butyl alcohol 40 parts by mass

### [Example 10]

A decorative sheet was produced and a melamine decorative plate was obtained in the same manner as in Example 1 except that the printing ink for forming a solid layer 1 was changed to the following printing ink for forming a solid layer 6.

### <Printing ink for forming solid layer 6>

- Acrylic polyol 20 parts by mass
- Ethyl acetate 80 parts by mass

### [Example 11]

A decorative sheet was produced and a melamine decorative plate was obtained in the same manner as in Example 1 except that the printing ink for forming a pattern layer 1 was changed to the following printing ink for forming a pattern layer 2, and the pattern layer including acrylic urethane resin was formed by curing after the application.

### <Printing ink for forming pattern layer 2>

- Pigments (such as azo based, quinacridone based, carbon black) 10 parts by mass
- Acrylic polyol 20 parts by mass
- Hexamethylene diisocyanate 3 parts by mass
- Ethyl acetate 67 parts by mass

### [Comparative Example 1]

A decorative sheet was produced and a melamine decorative plate was obtained in the same manner as in Example 1 except that the solid layer (polar group containing resin layer) was not formed.

### [Comparative Example 2]

A decorative sheet was produced and a melamine decorative plate was obtained in the same manner as in Example 1 except that the printing ink for forming a solid layer 1 was changed to the following printing ink for forming a solid layer 7.

### <Printing ink for forming solid layer 7>

- Acrylic based resin 10 parts by mass
- Methylethyl ketone 30 parts by mass
- Ethyl acetate 40 parts by mass
- Butyl acetate 20 parts by mass

### [Comparative Example 3]

The printing ink for forming a solid layer 1 in Example 1 was changed to the printing ink for forming a pattern layer 2 (described in Example 11), and the solid layer, having a thickness of 2.0 µm, including acrylic urethane resin was formed by curing after the application. Also, the printing ink for forming a pattern layer 1 in Example 1 was changed to the printing ink for forming a pattern layer 2, and the pattern layer including acrylic urethane resin was formed by curing after the application.

A decorative sheet was produced and a melamine decorative plate was obtained in the same manner as in Example 1 except for these changes.

### [Comparative Example 4]

A decorative sheet was produced and a melamine decorative plate was obtained in the same manner as in Example 1 except that the porous substrate was changed to PM-84P from KJ Specialty Paper Co., Ltd.

### [Comparative Example 5]

A decorative sheet was produced and a melamine decorative plate was obtained in the same manner as in Example 1 except that the porous substrate was changed to KSH801P from KJ Specialty Paper Co., Ltd.

### [Measurement of ash content]

The ash content of the decorative sheet produced above was measured by the method described above. The results are shown in Table 1 and Table 2.

### [Measurement of contact angle with respect to pure water]

For the decorative sheet produced above, the contact angle with respect to pure water of the design layer exposed from the releasing layer was measured by the method described above. The results are shown in Table 1 and

Table 2.

### [Measurement of wettability]

For the decorative sheet produced above, the wettability of the design layer exposed from the releasing layer was measured by the method described above. The results are shown in Table 1 and Table 2.

### [Evaluation]

### (Evaluation of gloss matte designability)

The gloss matte designability of the obtained melamine decorative plate was evaluated visually. Specifically, the gloss matte designability and the condition of the matte portion (releasing layer) were checked by visually observing the obtained decorative plate respectively from the position 50 cm away from the decorative plate, under the light source of a natural color fluorescent lamp color rendering AA (model number: FLR40S•D-SDL/M from Panasonic Corporation).

Observers scored the gloss matte designability in a five-point scale (1 point for the worst, and 5 points for the best) from 1 point to 5 points. Incidentally, the evaluation graded as follows: 1 point when a large part of the melamine was not peeled off, or marked whitening was observed in the matte portion and in the vicinity thereof, and a sufficient gloss matte design was not confirmed; and 5 points when the peeled melamine residue was not confirmed in the matte portion, and a sufficient gloss matte design was confirmed. The evaluation was respectively carried out by 10 observers, the average points of every observer was calculated, and the gloss matte designability was evaluated based on the following criteria.

### • Evaluation criteria

A: The average score was 3 or more, when evaluating the gloss matte designability
B: The average score was 2 or more and less than 3, when evaluating the gloss matte designability
C: The average score was less than 2, when evaluating the gloss matte designability

### (Impregnation property evaluation)

The impregnation property of the produced decorative sheet was measured by the following method.
1) A circular sample with a radius of 2 cm was cut out from a decorative sheet, and the mass of the sample was measured (mass of the sample before the test).

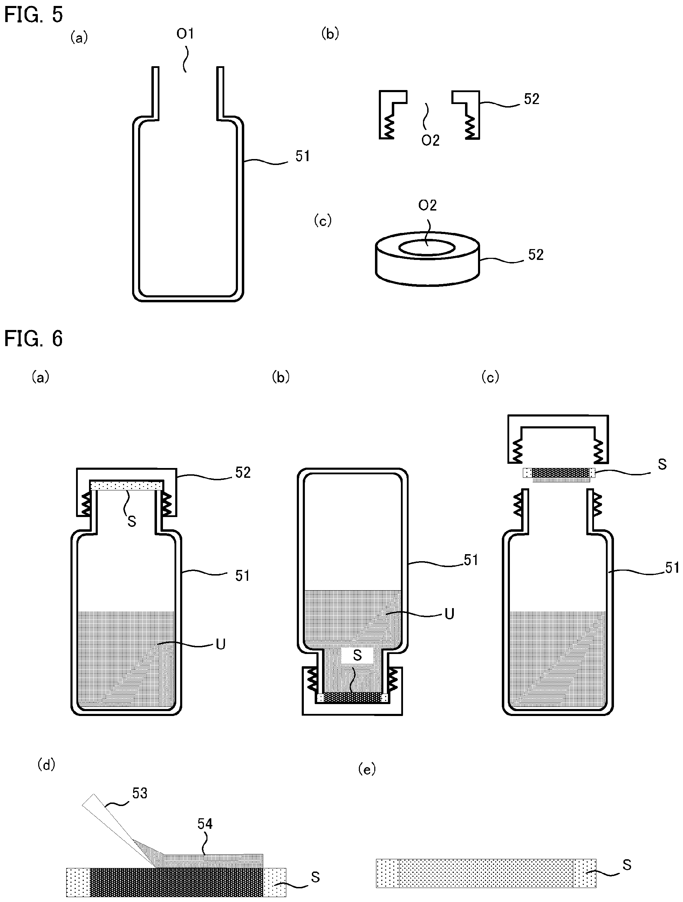

2) FIG. 5(a) is a schematic cross-sectional view of the container used for the impregnation property evaluation, and FIGS. 5(b) and (c) are a schematic cross-sectional view and a schematic perspective view of the container lid. As shown in FIGS. 5, a polyethylene container (content capacity of approximately 300 ml) 51 (FIG. 5(a)) including a first opening portion O₁, and a lid 52 (FIG. 5(b) and FIG. 5(c)), which can be fixed to the container 51 and includes a second opening portion O₂ were prepared. Incidentally, the shape of the first opening portion was circular with a diameter of 3 cm (impregnation area of approximately 0.0007 m²). As shown in FIG. 6(a), 100 g of uncured melamine resin U (60 g of water-soluble methylol melamine resin (Nikaresin S-260 from Nippon Carbide Industries Co., Inc.) dissolved in 40 g of pure water) was added into the container 51. The sample S was then disposed so as to cover the first opening portion O₁. Then, the sample S was set by using the lid 52, and fixing the container 1 and the lid 52. At this time, the sample S was set so that the releasing layer surface faces the inside of the container.
3) As shown in FIG. 6(b), the container 51 was turned over, and the sample S was impregnated with the uncured melamine resin U.
4) After 30 seconds, as shown in FIG. 6(c), the container 51 was turned over again, and the sample S was taken out immediately.
5) As shown in FIG. 6(d), unimpregnated melamine resin 54 remaining on the releasing layer side surface of the sample S was scraped and removed with a metal plate 53.
6) As shown in FIG. 6(e), the sample S was dried for 1 minute at 80°C, and then, the mass was measured again (the mass of the sample after the test).

The impregnation amount (g/m²) of the melamine resin impregnated into the decorative sheet was calculated from the following formula, and evaluated based on the following criteria. Impregnation amount of melamine resin (g/m2) = {sample mass after test (g) - sample mass before test (g)}/opening portion area of container (m2)

Also, in relation to the impregnation amount (g/m²), the impregnated amount (g/m²) was determined based on the above method for 10 samples, excluding the largest value, second largest value, smallest value, and second smallest value, and the average value of the remaining 6 values were calculated as the impregnation amount.

### • Evaluation criteria

A: the impregnation amount of the melamine resin was 45 g/m² or more
B: the impregnation amount of the melamine resin was 35 g/m² or more and less than 45 g/m²
C: the impregnation amount of the melamine resin was less than 35 g/m²

**[Table 1]**

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|
| Solid layer thickness [*µ*m] | 1.0 | 3.0 | 0.5 | 2.0 | 1.0 | 1.0 | 2.0 | 2.0 | 2.0 | 1.0 | 1.0 |
| Ink for forming solid layer | Ink 1 | Ink 1 | Ink 1 | Ink 2 | Ink 1 | Ink 1 | Ink 3 | Ink 4 | Ink 5 | Ink 6 | Ink 1 |
| Pattern layer thickness [*µ*m] | 2.0 | 2.0 | 2.0 | 2.0 | 2.0 | 2.0 | 2.0 | 2.0 | 2.0 | 2.0 | 2.0 |
| Ink for forming pattern layer | Ink 1 | Ink 1 | Ink 1 | Ink 1 | Ink 1 | Ink 1 | Ink 1 | Ink 1 | Ink 1 | Ink 1 | Ink 2 |
| Ash content ration [%] | 28.5 | 29.0 | 28.2 | 29.6 | 34.7 | 19.4 | 29.2 | 29.9 | 29.5 | 29.6 | 28.4 |
| Impregnation amount [g/m2] | 48 | 42 | 59 | 49 | 51 | 44 | 48 | 51 | 49 | 46 | 41 |
| Pure water contact angle [° ] | 37.7 | 72.8 | 23.7 | 37.8 | 36.0 | 54.6 | 38.2 | 38.1 | 36.7 | 39.1 | 78.3 |
| Wettability [mN/m] | 70 | 60 | 70 | 70 | 70 | 67 | 70 | 70 | 70 | 70 | 50 |
| Gloss matte designability | A | A | B | A | B | A | A | A | A | A | A |
| Impregnation property | A | B | A | A | A | B | A | A | A | A | B |

**[Table 2]**

| | Comp. Ex. 1 | Comp. Ex. 2 | Comp. Ex. 3 | Comp. Ex. 4 | Comp. Ex. 5 |
|---|---|---|---|---|---|
| Solid layer thickness [*µ*m] | - | 1.0 | 2.0 | 1.0 | 1.0 |
| Ink for forming solid layer | - | Ink 7 | Ink for forming pattern layer 2 | Ink 1 | Ink 1 |
| Pattern layer thickness [*µ*m] | 2.0 | 2.0 | 2.0 | 2.0 | 2.0 |
| Ink for forming pattern layer | Ink 1 | Ink 1 | Ink 2 | Ink 1 | Ink 1 |
| Ash content ration [%] | 27.1 | 28.3 | 28.5 | 10.7 | 41.1 |
| Impregnation amount [g/m2] | 63 | 33 | 16 | 21 | 66 |
| Pure water contact angle [° ] | 22.7 | 84.8 | 86.1 | 85.5 | 22.1 |
| Wettability [mN/m] | 70 | 46 | 40 | 40 | 70 |
| Gloss matte designability | C | A | A | A | C |
| Impregnation property | A | C | C | C | A |

As shown in Table 1 and Table 2, the melamine decorative plate having good impregnation property of the uncured resin and gloss matte designability can be produced with the decorative sheets in Examples 1 to 11, as compared to Comparative Examples 1 to 5.

Meanwhile, since the solid layer was not provided in Comparative Example 1, the gloss matte designability was low. In Comparative Example 2 and Comparative Example 3, since the solid layer did not include the resin including a polar group, the impregnation property of the uncured resin was low. Incidentally, in Comparative Example 3, although the printing ink for forming a pattern layer 2 included acrylic polyol, OH was consumed by the curing reaction due to the curing agent so that OH was not left in the layer, and the impregnation property of the uncured resin was low. Since the ash content of the decorative sheet was low in Comparative Example 4, the impregnation property of the uncured resin was low. The gloss matte designability was low in Comparative Example 5, since the ash content of the decorative sheet was high so that the ink for a releasing layer permeated.

### (Evaluation of resin)

The solubility of the resin including a polar group used for the respective inks described above was evaluated. The method for evaluating the solubility was as described above. The results are shown in Table 3.

**[Table 3]**

| | Solubility (Yes when dissolved or dispersed) | | |
|---|---|---|---|
| | Water | Methanol | Ethanol |
| Casein | Yes | Yes | Yes |
| Nitrocellulose | Yes | Yes | Yes |
| Melamine | Yes | Yes | Yes |
| Cellulose acetate | No | Yes | Yes |
| Hydroxypropyl cellulose | Yes | Yes | Yes |
| Polyvinyl butyral resin | No | Yes | Yes |
| Acrylic polyol | Yes | Yes | Yes |

As shown in Table 3, all of the resins including a polar group were highly compatible with water or alcohol.

As described above, in the present disclosure, for example, the following inventions are provided.
[1] A decorative sheet used for a production of a resin-impregnated decorative plate, the decorative sheet comprising:
   a porous substrate; a design layer; and a releasing layer formed in a pattern, in this order in a thickness direction,
   the design layer is disposed so as to cover an entire surface of the porous substrate, viewed from the thickness direction, and includes a polar group containing resin layer including a resin including any one or more polar groups of a hydroxy group, an amino group and a carboxy group, and
   an ash content included in the decorative sheet is 15% by mass or more and 40% by mass or less.
[2] The decorative sheet according to [1], wherein the resin including a polar group is a resin that is dissolved or dispersed in water, methanol or ethanol.
[3] The decorative sheet according to [1] or [2], wherein a contact angle with respect to pure water, of the design layer exposed from the releasing layer, as view from the thickness direction, is 80° or less.
[4] The decorative sheet according to any one of [1] to [3], wherein a wettability of the design layer exposed from the releasing layer, as view from the thickness direction, is 50 mN/m or more.
[5] The decorative sheet according to any one of [1] to [4], wherein the resin including a polar group includes any one or more of casein, melamine based resin, polyvinyl alcohol, polyvinyl alcohol derivative, cellulose and cellulose derivative.
[6] The decorative sheet according to any one of [1] to [5], wherein, when an impregnation property test using melamine resin is carried out to the decorative sheet, an impregnation amount of the melamine resin into the decorative sheet is 35 g/m² or more.
[7] The decorative sheet according to [6], wherein the impregnation amount of the melamine resin into the decorative sheet is 60 g/m² or less.
[8] The decorative sheet according to any one of [1] to [7], wherein the polar group containing resin layer is a solid layer.
[9] The decorative sheet according to any one of [1] to [7], wherein the polar group containing resin layer is a plurality of pattern layers arranged side by side so as to cover an entire surface of the porous substrate, as viewed from the thickness direction.
[10] The decorative sheet according to any one of [1] to [9], wherein the design layer includes a pattern layer;
   the polar group containing resin layer is disposed between the pattern layer and the porous substrate; and
   the pattern layer includes the resin including a polar group.
[11] The decorative sheet according to any one of [1] to [10], wherein the resin including a polar group includes casein.
[12] The decorative sheet according to any one of [1] to [11], wherein the thickness of the polar group containing resin layer is 0.5 µm or more and 6 µm or less.
[13] The decorative sheet according to any one of [1] to [12], wherein the porous substrate includes titanium paper.
[14] The decorative sheet according to any one of [1] to [13], wherein the ash content included in the decorative sheet is 20% by mass or more and 30% by mass or less.
[15] The decorative sheet according to any one of [1] to [14], wherein the resin-impregnated decorative plate is a melamine decorative plate.
[16] The decorative sheet according to any one of [1] to [15], wherein the releasing layer includes a cured product of a curable resin X.
[17] The decorative sheet according to [16], wherein the curable resin X is ionizing radiation curable resin.
[18] The decorative sheet according to [17], wherein the ionizing radiation curable resin is electron beam curable resin.
[19] A resin-impregnated decorative plate comprising:
   the decorative sheet according to any one of [1] to [18];
   a core substrate disposed so as to face the porous substrate of the decorative sheet; and
   a cured resin layer disposed between patterns of the releasing layer, and includes a cured product of a curable resin Y;
   the porous substrate includes the cured product of the curable resin Y.
[20] A method for producing a resin-impregnated decorative plate, the method comprising:
   a preparing step of preparing the decorative sheet according to any one of [1] to [18];
   a stacked body forming step of forming a stacked body (i) including a core substrate, the decorative sheet, a curable resin layer including a curable resin Y, and a release film, in this order in a thickness direction, (ii) a porous substrate side surface of the decorative sheet is disposed so as to face the core substrate, and (iii) the decorative sheet is impregnated with the curable resin Y;
   a heating and pressurizing step of obtaining a cured stacked body by curing the curable resin Y, and forming a cured resin layer from the curable resin layer by heating and pressurizing the stacked body; and
   a peeling step of removing the cured resin layer disposed at a position overlapping with the releasing layer in the thickness direction, and remaining the cured resin layer disposed between patterns of the releasing layer by peeling the release film from the cured stacked body.

### Reference Signs List

1: porous substrate
2: design layer
3: releasing layer
10: decorative sheet
20: core substrate
21: polar group containing resin layer
22: another layer
30: curable resin layer
31: cured resin layer
40: release film
100 resin-impregnated decorative plate

## Claims

1. A decorative sheet used for a production of a resin-impregnated decorative plate, the decorative sheet comprising:
a porous substrate; a design layer; and a releasing layer formed in a pattern, in this order in a thickness direction,
the design layer is disposed so as to cover an entire surface of the porous substrate, viewed from the thickness direction, and includes a polar group containing resin layer including a resin including any one or more polar groups of a hydroxy group, an amino group and a carboxy group, and
an ash content included in the decorative sheet is 15% by mass or more and 40% by mass or less.

2. The decorative sheet according to claim 1, wherein the resin including a polar group is a resin that is dissolved or dispersed in water, methanol or ethanol.

3. The decorative sheet according to claim 1, wherein a contact angle with respect to pure water, of the design layer exposed from the releasing layer, as view from the thickness direction, is 80° or less.

4. The decorative sheet according to claim 1, wherein a wettability of the design layer exposed from the releasing layer, as view from the thickness direction, is 50 mN/m or more.

5. The decorative sheet according to claim 1, wherein the resin including a polar group includes any one or more of casein, melamine based resin, polyvinyl alcohol, polyvinyl alcohol derivative, cellulose and cellulose derivative.

6. The decorative sheet according to claim 1, wherein, when an impregnation property test using melamine resin is carried out to the decorative sheet, an impregnation amount of the melamine resin into the decorative sheet is 35 g/m² or more.

7. The decorative sheet according to claim 7, wherein the impregnation amount of the melamine resin into the decorative sheet is 60 g/m² or less.

8. The decorative sheet according to claim 1, wherein the polar group containing resin layer is a solid layer.

9. The decorative sheet according to claim 1, wherein the polar group containing resin layer is a plurality of pattern layers arranged side by side so as to cover an entire surface of the porous substrate, as viewed from the thickness direction.

10. The decorative sheet according to claim 1, wherein the design layer includes a pattern layer;
the polar group containing resin layer is disposed between the pattern layer and the porous substrate; and
the pattern layer includes the resin including a polar group.

11. The decorative sheet according to claim 1, wherein the resin including a polar group includes casein.

12. The decorative sheet according to claim 1, wherein the thickness of the polar group containing resin layer is 0.5 µm or more and 6 µm or less.

13. The decorative sheet according to claim 1, wherein the porous substrate includes titanium paper.

14. The decorative sheet according to claim 1, wherein the ash content included in the decorative sheet is 20% by mass or more and 30% by mass or less.

15. The decorative sheet according to claim 1, wherein the resin-impregnated decorative plate is a melamine decorative plate.

16. The decorative sheet according to claim 1, wherein the releasing layer includes a cured product of a curable resin X.

17. The decorative sheet according to claim 15, wherein the curable resin X is ionizing radiation curable resin.

18. The decorative sheet according to claim 16, wherein the ionizing radiation curable resin is electron beam curable resin.

19. A resin-impregnated decorative plate comprising:
the decorative sheet according to any one of claims 1 to 18;
a core substrate disposed so as to face the porous substrate of the decorative sheet; and
a cured resin layer disposed between patterns of the releasing layer, and includes a cured product of a curable resin Y;
the porous substrate includes the cured product of the curable resin Y.

20. A method for producing a resin-impregnated decorative plate, the method comprising:
a preparing step of preparing the decorative sheet according to any one of claims 1 to 18;
a stacked body forming step of forming a stacked body (i) including a core substrate, the decorative sheet, a curable resin layer including a curable resin Y, and a release film, in this order in a thickness direction, (ii) a porous substrate side surface of the decorative sheet is disposed so as to face the core substrate, and (iii) the decorative sheet is impregnated with the curable resin Y;
a heating and pressurizing step of obtaining a cured stacked body by curing the curable resin Y, and forming a cured resin layer from the curable resin layer by heating and pressurizing the stacked body; and
a peeling step of removing the cured resin layer disposed at a position overlapping with the releasing layer in the thickness direction, and remaining the cured resin layer disposed between patterns of the releasing layer by peeling the release film from the cured stacked body.
